# EUROPEAN PATENT SPECIFICATION

(11) **EP 1 443 234 B1**
(45) Date of publication and mention of the grant of the patent: **03.05.2006**
(21) Application number: 03258192.8
(22) Date of filing: 23.12.2003
(51) Int. Cl.: F16D 65/097, F16D 55/226

(54) **A disc brake assembly**
Scheibenbremse
Frein à disque

(30) Priority: 30.01.2003 GB 0302186
(43) Date of publication of application: 04.08.2004
(73) Proprietor: Meritor Heavy Vehicle Braking Systems (UK) Limited, Cwmbran, Gwent NP44 3XU (GB)
(72) Inventor: Thomas, Paul Anthony, Caldicot, Newport NP26 3AY (GB); Roberts, Paul, Newport NP20 5QU (GB)
(74) Representative: Jones, John Bryn

(56) References cited:
- EP-A- 1 391 628
- WO-A-03/069180
- DE-A- 19 849 309
- US-A- 4 773 511

## Description

The present invention relates to a disc brake assembly.

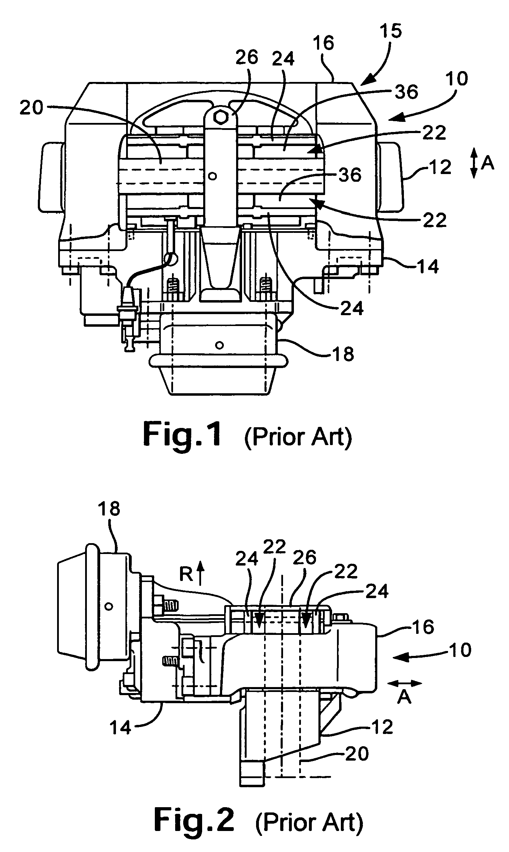

Known disc brakes (shown in figures 1 to 4) comprise a disc or rotor 20 mounted to a wheel hub for rotation with a vehicle wheel. A brake carrier 12 is fixed relative to the axis of rotation of the rotor 20 and is secured to a non-rotating portion of the vehicle (eg the vehicle suspension). In "floating caliper" type brakes, a brake caliper 15 comprising a bridge 16 secured to a housing 14 is slidably mounted on the carrier 12 to allow for movement parallel to the axis of rotation of the rotor 20. An actuator 18 communicates with one or more pistons or tappets (not shown) provided in housing 14 to apply the force required for the brake to function.

A pair of brake pads 22 comprising friction material 36 mounted to a solid backplate 34 are positioned either side of the rotor 20 with the friction material facing the planar faces of the rotor. The backplates 34 of the pads 22 are seated on vertical and horizontal abutment regions 28 and 30 respectively provided in openings 32 of the carrier 12 to restrain the pads 22 from rotational and radially inward movement respectively. In a typical floating caliper type brake, one of the backplates 34 engages with the piston(s), either directly or via a spreader plate to distribute the load. Braking is achieved by the actuator causing the piston to push one of the pads 22 towards the rotor 20. Because the caliper is able to "float" on the carrier, this causes an equal frictional braking load to be applied by both pads.

Backplates 34 of vehicle disc brakes pads 22 essentially perform two functions: they provide a solid support for slidably mounting the friction material 36 of the brake within the brake carrier in such a way to transmit shear loads induced on the friction material during braking to the carrier, and they transmit and distribute the pressure applied by brake tappets or pistons during braking evenly to the surface of the friction material to ensure even wear of the friction material over its surface. In order to perform the former of these two functions it is common for resilient means such as a leaf type pad springs 24 to restrain radially outward movement (indicated by arrow R) of the pads in the carrier whilst permitting movement towards and away (indicated by arrow A) from an associated brake disc and to prevent rattling of the pad in use.

Pad springs 24 are typically elongate and extend along a proportion of the radially outermost face of a brake pad backplate 34 when fitted. Pad springs 24 are typically pre-loaded to a certain extent against the carrier by a pad retainer 26 which spans an opening between the bridge 16 and housing 14 and that contacts the approximate centre of the spring. This force is typically reacted radially outwardly by contact with the backplate proximate each end of the spring. Formations are also typically provided on the backplate and/or the pad spring to retain the pad spring on the backplate during movement of the pad 22 parallel to the axis of rotation of rotor 14.

During brake actuation, the brake pad backplate and the pad spring moves towards and away from the brake disc. If the retainer and the spring are not parallel (due to loads on the pad spring and/or uneven brake pad wear) there is a tendency for the edge 25 of the pad spring to indent into the underside 29 of the pad retainer. This can prevent movement of the backplate which inhibits braking performance. This problem is increased where heavy brake pads are used, since a stiffer pad spring is required which has a greater tendency to indent into the pad retainer.

Figure 3 shows an example of a brake pad described in US4773511.

GB2356027, GB2172352 and GB2142394 show typical known brake pad springs which are made from wire, and are used to prevent radial movement of a brake pad.

DE3222859 and DE3227195 both show a disc brake pad assembly including pad springs with rounded edges which abut against a pad retainer to restrain radial movement of a brake pad.

An object of the present invention is to provide an improved disc brake assembly.

According to the present invention there is provided a disc brake assembly as defined in claim 1.

Advantageously, securing the pad retainer to the outboard side of the caliper at a smaller radius provides for a more compact assembly, and the provision of a rounded edge on the pad spring adjacent the crook allows the caliper to be designed with the outboard pad being positioned further outboard than known designs whilst ensuring the spring does not indent into the pad retainer. This allows the brake pad to have a larger thickness of friction material than known designs. Alternatively the provision of a rounded edge allows the caliper to be designed with the outboard pad being positioned at the same position as known designs and thus those components outboard of the crook that secure the pad retainer can be designed at a more inboard position, thereby reducing the overall space envelope for the brake caliper.

Preferably the pad spring includes an aperture into which a protrusion from a brake pad backplate locates so as to prevent axial movement between the pad spring and the backplate.

The present invention will now be described, by way of example only, with reference to the accompanying drawings in which:
Figure 1 is a plan view of a disc brake incorporating a prior art disc brake pad assembly;
Figure 2 is an end view of the disc brake of figure 1,
Figure 3 is an end view of a portion of the carrier and one prior art disc pad and pad spring of figures 1 and 2,
Figure 4 is a front view of a portion of the pad retainer and pad spring of the disc brake pad assembly of figures 1 to 3,
Figure 5 is a plan view of part of a disc brake assembly according to the present invention,
Figure 6 is an end view of a portion of the disc brake assembly of figure 5,
Figure 7 is a front view of a portion of the disc brake assembly of figure 5, and
Figure 8 is a enlarged front view of a portion of the disc brake assembly of figure 5.

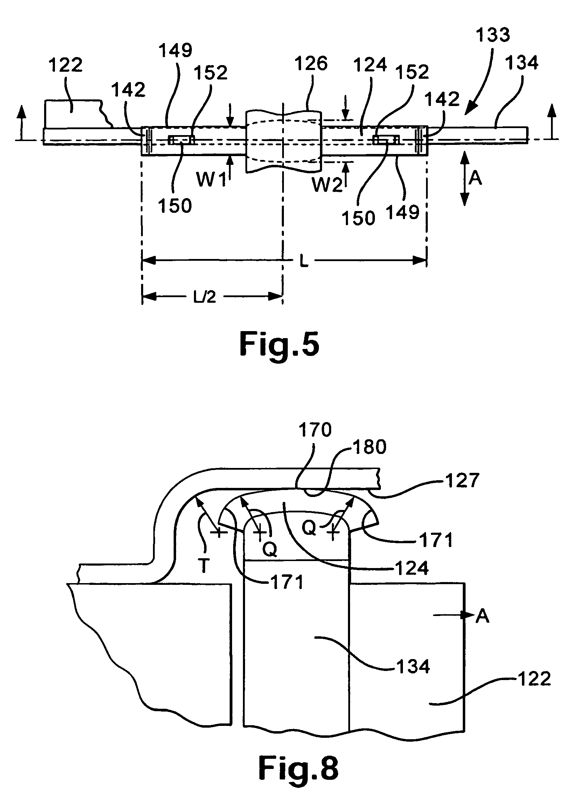

With reference to figures 5 to 7 there is shown a disc brake assembly 129 according to the present invention, including a disc brake pad assembly 133 and a brake caliper 115. The novel assembly 133 is capable of being fitted into a prior art disc brake 10 as described above. The assembly 133 comprises a brake pad 131 including a backplate 134 to which friction material 122 is secured. The backplate comprises a pair of curved surfaces in the form of circumferentially spaced abutments 140 on the radially outer edge 135 thereof. The backplate 134 also include protrusions in the form of a pair of radially outwardly extending lugs 150 which project from the radially outer edge 135 of the backplate 134 and are located between abutments 140.

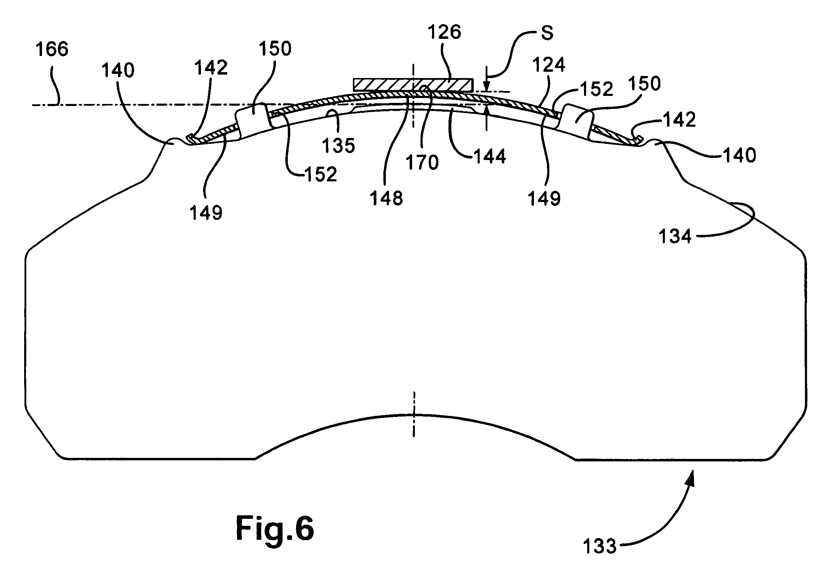

As can be seen from figures 5 and 6, pad spring 124 is elongate having a length L, with a central portion 148 half way along the length of the spring, and end regions 149. The central portion defines the maximum width W2 of the spring, with the remaining part of the spring having a reduced width W1. The spring is stamped from sheet metal and is typically 1mm thick.

When fitted to the backplate 134, the pad spring 124 extends in the circumferential direction transverse to the axis of movement of the backplate 134 towards and away from rotor 20 when in use (indicated by arrow A). The spring is provided with upturned ends 142 and two apertures in the form of slots 152 positioned at end regions 149 such that lugs 150 may fit therethrough. The abutments 140 on backplate 134 are shaped such that the upturned ends 142 of the pad spring are prevented from sliding over them. Location of lugs 150 in slots 152 prevents axial movement between the spring and the backplate.

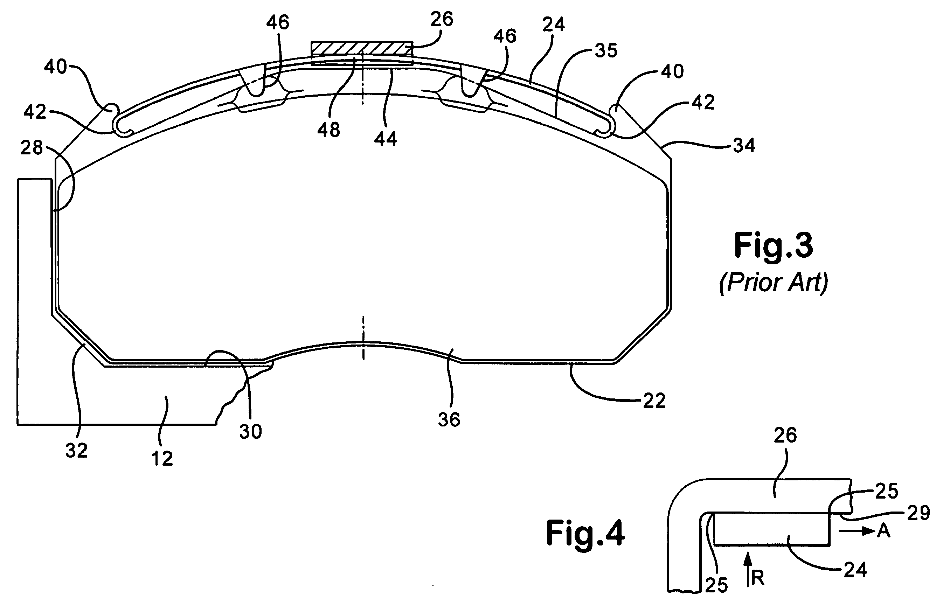

It can be seen from figure 6 that when installed, up turned end 142 are spaced slightly from their associated abutments 140. Similarly, the circumferencial ends of each slot 152 is spaced slightly from its associated lug 150. Consideration of figure 3 shows that, when installed, spring ends 42 are in permanent engagement with their respective abutment 40. This permanent engagement reduces the tendency of spring 24 to tip relative to the backplate. It can be seen that an equivalent feature is not found on assembly 133. Therefore the present invention is particularly applicable to brake backplates having lugs which project through holes in the pad spring since such designs are inherently more prone to the tipping of the spring relative to the pad.

In other embodiments of the present invention axial movement may be prevented by other means. For example, a spring according to the present invention may include protrusions (similar to protrusion 46 (figure 3) of the prior art) which wraps around the backplate.

A radially inner surface 127 of a pad retainer 126 holds down the central portion 148 of the pad spring 124 by abutting against it. The inner surface 127 is substantially planar. The area of the pad spring in contact with the pad retainer 126 defines a surface 170. With reference to figure 8 it can be seen that the surface 170 is defined by a profile which has a substantially planar section 180 and two rounded edges 171 of radius Q. When viewing figure 8, the rounded edges 171 are symmetrical, thereby allowing pad spring 124 to be fitted either way round on brake pad 131 whilst ensuring a rounded edge is adjacent bend 126A.

In other embodiments the profile could be elliptical.

Typically the spring is formed from sheet metal, typically steel, such as spring steel. Typically a blank will be stamped from sheet metal (either including holes 152, or alternatively these holes being stamped at a later stage). The blank will then have subsequent pressing operations performed on it to form the requisite final shape. Advantageously, the rounded edges 171 can be formed as part of a pressing process.

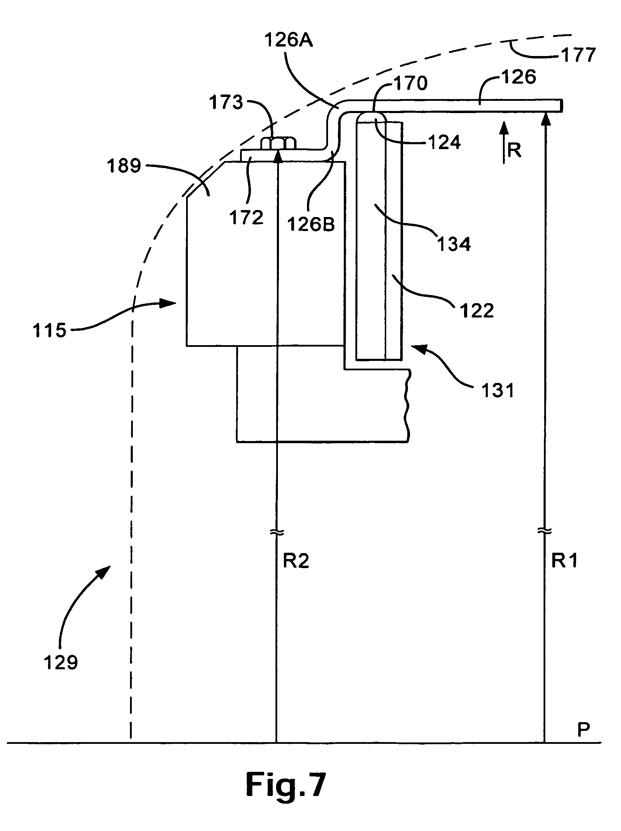

The pad retainer is secured to an outboard end 189 of the brake caliper 115 by a securing feature in the form of a bolt 173. The dotted line 177 of figure 7 shows the inside profile of the wheel to which the disc brake assembly is fitted. It can be seen that space between the assembly, in particular the pad retainer and the wheel profile, is restricted. Thus the pad retainer which is mounted on the caliper 115 is shaped so as to locate within the space provided. The radius of surface 127 of the pad retainer is R1, and the radius of the securing feature is R2 (necessarily less than R1, in view of the space envelope). Both radii having a centre at the wheel axis (indicated by P). To accommodate the location of the securing feature on the brake caliper 115, the retainer includes a crook in the form of a bend 126A. Bend 126A includes a radius T which is substantially the same as the radius Q of the rounded edge of the pad spring surface 170. In this embodiment, T and Q are in the range between 5.25 mm and 6.75 mm. In other embodiments, this range can be widened. In particular bend 126A accommodates the fact that bolt 173 is at a smaller radius than surface 127.

The retainer includes a further bend 126B.

In another embodiment the pad retainer could include a crook in the form of a turn or a curve or any other feature which allows the second radius R2 to be smaller than the first radius R1.

By providing a rounded edge on the pad spring adjacent to the crook ensures the pad spring does not dig into the crook.

Prior to fitting the pad spring 124 onto lugs 150, the spring has an arcuate profile with a shorter radius of curvature than is shown in figure 6. To fit the pad spring 124 to the backplate, it must be compressed by a certain amount for the slots 152 to fit over both lugs 150. Once fitted, a certain amount of relaxation occurs such that the circumferentially outermost edge of slots 152 contact the radially outermost face of lugs 150, thereby retaining the spring on the backplate 134 prior to the mounting of the assembly 133 in the brake 10. In other embodiments, the lugs 150 may not perform this circumferential retaining function.

In figure 6 the pad assembly 133 is shown in its assembled state on disc brake 10 with pad retainer 126 in place. It should be noted that the pad retainer 126 depresses the central portion 148 of the spring 124 such that the circumferentially outermost edges of slots 152 no longer contact lugs 150, but a space between these circumferentially innermost edges of holes 152 and the lugs 150 remains.

When the backplate 134 is subjected to radially outward accelerative loads due to, for example, a vehicle to which the backplate is fitted travelling over uneven terrain, the loads cause the distance S between the retainer 126 and central region 144 of the backplate to decrease. In turn, this causes the spring 124 to straighten along its length and the ends 142 thereof to slide circumferentially outwardly up until they come into contact with abutments 140. Thereafter, further deflections towards the radially outermost face 135 of the backplate up to position 166 have a significantly higher spring rate due to spring 124 entering an elastic "buckling" mode of deflection in which the central portion 148 continues to straighten, but the portions intermediate the central portion and the ends are forced to curve away from radially outer face 135.

During radial movement as described above, the central portion 148 of the pad spring and the retainer 126 are in contact over surface 170, with the retainer restraining radial movement of the pad.

Actuation of the brakes results in the movement of the pad towards the rotor in the direction of arrow A and thus movement of the spring relative to the pad retainer. The rounded edge profile of the pad spring ensures that even when the pad spring surface and the retainer are not parallel, the rounded edge does not indent into the pad retainer and therefore movement of the pad spring is not inhibited and braking performance is not affected.

It should be understood that numerous changes may be made within the scope of the present invention. For example, alternative means of securing the pad spring to the backplate may be employed, as may other suitable shapes of the pad spring end and abutment (e.g. such as inwardly curved or straight ends). The circumferential restraint need not occur at the extreme ends of the spring. For example the abutments for providing circumferential restraint may be the circumferential inner faces of the lugs which restrain the circumferentially inner edges of the slots.

## Claims

1. A disc brake assembly (129) including a brake pad (131), a pad retainer (126), a brake caliper (115), and a pad spring (124), the pad retainer having a planar region (127) situated at a first radius (R1) from the rotational axis (P) of an associated brake disc for engagement with a planar region (180) of the pad spring to restrain radial movement of the pad, the pad retainer being secured to an outboard side (189) of the caliper at a second radius (R2) from said axis (P) and having a crook (126A) adjacent its planar region (127) to allow the second radius to be smaller than the first radius, **characterised in that that** part of the pad spring (124) which engages the planar region (127) of the pad retainer has a rounded edge (171) adjacent the crook.

2. A disc brake assembly according to claim 1 in which said part of the pad spring which engages the planar region of the pad retainer has a further rounded edge (171) remote from the crook.

3. A disc brake assembly according to claim 1 in which the pad spring is symmetrical.

4. A disc brake assembly according to claim 3 including a pair of brake pads defined by said brake pad and a further brake pad and a pair of pad springs defined by said pad spring and a further pad spring.

5. A disc brake assembly as defined in any preceding claim in which the rounded edge is formed as part of a pressing process.

6. A disc brake assembly according to any preceding claim in which the pad spring is substantially elongate being defined by a length (L) and a width, preferably the planar region of the pad spring is located on a central portion (148) of the pad spring, the central portion being located substantially half way along the length of the pad spring, preferably the central portion defines a maximum width (W2) of the pad spring, and the remainder of the pad spring has a reduced width (W1).

7. A disc brake assembly according to any preceding claim in which the pad spring has a curved profile in the lengthwise direction.

8. A disc brake assembly according to any preceding claim in which the spring has radially outwardly curved ends (142) so as to radially retain the pad spring on the backplate.

9. A disc brake assembly according to claim 8, in which the backplate has complementary curved surfaces (140) for abutment with the spring curved ends.

10. A disc brake assembly according to any preceding claim in which the spring includes an aperture (152) and the backplate includes a protrusion (150) which locates in the aperture so as to prevent axial movement between the spring and the backplate.

11. A disc brake assembly according to any one of claims 1 to 8 in which the spring includes a protrusion which locates around the backplate so as to prevent axial movement between the spring and the backplate.

12. A disc brake assembly according to any preceding claim in which the crook includes a crook radius (T) to allow the second radius (R2) to be smaller than the first radius (R1), in which the crook radius is substantially the same as a radius (Q) of the rounded edge of the pad spring adjacent the crook.

13. A disc brake assembly according to claim 9 in which the crook radius is between 4 mm and 8 mm, preferably between 5 mm and 7 mm, and more preferably between 5.25 and 6.75 mm.

## Patentansprüche

1. Scheibenbremsenbaugruppe (129) mit einem Bremsklotz (131), einer Bremsklotzhalterung (126), einem Bremssattel (115) und einer Bremsklotzfeder (124), wobei die Bremsklotzhalterung einen ebenen Bereich (127) aufweist, der sich in einem ersten Radius (R1) von der Drehachse (P) einer zugehörigen Bremsscheibe befindet, um in einen ebenen Bereich (180) der Bremsklotzfeder einzugreifen, um die Radialbewegung des Bremsklotzes einzuschränken, wobei die Bremsklotzhalterung an einer außen liegenden Seite (189) des Bremssattels in einem zweiten Radius (R2) von der Achse (P) befestigt ist und angrenzend an ihren ebenen Bereich (127) eine Krümmung (126A) aufweist, damit der zweite Radius kleiner sein kann als der erste Radius, **dadurch gekennzeichnet, dass** der Teil der Bremsklotzfeder (124), der an dem ebenen Bereich (127) der Bremsklotzhalterung angreift, im Bereich der Krümmung eine abgerundete Kante (171) aufweist.

2. Scheibenbremsenbaugruppe nach Anspruch 1, bei der der Teil der Bremsklotzfeder, der an dem ebenen Bereich der Bremsklotzhalterung angreift, fern von der Krümmung eine weitere abgerundete Kante (171) aufweist.

3. Scheibenbremsenbaugruppe nach Anspruch 1, bei der die Bremsklotzfeder symmetrisch ist.

4. Scheibenbremsenbaugruppe nach Anspruch 3 mit zwei Bremsklötzen, die durch den besagten Bremsklotz und einen weiteren Bremsklotz definiert werden, und mit zwei Bremsklotzfedern, die durch die besagte Bremsklotzfeder und eine weitere Bremsklotzfeder definiert werden.

5. Scheibenbremsenbaugruppe nach einem der vorhergehenden Ansprüche, bei der die abgerundete Kante im Rahmen eines Pressverfahrens gebildet wird.

6. Scheibenbremsenbaugruppe nach einem der vorhergehenden Ansprüche, bei der die Bremsklotzfeder im Wesentlichen lang gestreckt ist und durch eine Länge (L) und eine Breite definiert ist, der ebene Bereich der Bremsklotzfeder vorzugsweise auf einem mittleren Abschnitt (148) der Bremsklotzfeder liegt, wobei sich der mittlere Abschnitt im Wesentlichen auf halber Strecke der Bremsklotzfeder befindet, der mittlere Abschnitt vorzugsweise eine maximale Breite (W2) der Bremsklotzfeder definiert und der Rest der Bremsklotzfeder eine verminderte Breite (W1) hat.

7. Scheibenbremsenbaugruppe nach einem der vorhergehenden Ansprüche, bei der die Bremsklotzfeder in Längsrichtung ein gewölbtes Profil hat.

8. Scheibenbremsenbaugruppe nach einem der vorhergehenden Ansprüche, bei der die Feder radial nach außen gebogene Enden (142) hat, um die Bremsklotzfeder auf der Grundplatte radial festzuhalten.

9. Scheibenbremsenbaugruppe nach Anspruch 8, bei der die Grundplatte komplementäre gewölbte Flächen (140) aufweist, die an den gebogenen Enden der Feder anschlagen.

10. Scheibenbremsenbaugruppe nach einem der vorhergehenden Ansprüche, bei der die Feder eine Öffnung (152) aufweist und die Grundplatte einen Vorsprung (150) aufweist, der in der Öffnung liegt, um eine Axialbewegung zwischen der Feder und der Grundplatte zu verhindern.

11. Scheibenbremsenbaugruppe nach einem der Ansprüche 1 bis 8, bei der die Feder einen Vorsprung aufweist, der die Grundplatte umgibt, um eine Axialbewegung zwischen der Feder und der Grundplatte zu verhindern.

12. Scheibenbremsenbaugruppe nach einem der vorhergehenden Ansprüche, bei der die Krümmung einen Krümmungsradius (T) hat, damit der zweite Radius (R2) kleiner sein kann als der erste Radius (R1), wobei der Krümmungsradius mit einem Radius (Q) der abgerundeten Kante der Bremsklotzfeder im Bereich der Krümmung im Wesentlichen identisch ist.

13. Scheibenbremsenbaugruppe nach Anspruch 9, bei der der Krümmungsradius zwischen 4 mm und 8 mm beträgt, vorzugsweise zwischen 5 mm und 7 mm und mehr bevorzugt zwischen 5,25 mm und 6,75 mm.

## Revendications

1. Un ensemble de frein à disque (129) comprenant une garniture de frein (131), un organe de retenue de garniture (126), un étrier de frein (115) et un ressort de garniture (124), l'organe de retenue de garniture comprenant une région plane (127) située à un premier rayon (R1), de l'axe de rotation (P) d'un disque de frein associé afin de venir en prise avec une région plane (180) du ressort de garniture pour limiter le déplacement radial de la garniture, l'organe de retenue de garniture étant fixé à un côté extérieur (189) de l'étrier à un deuxième rayon (R2) par rapport audit axe (P) et ayant un crochet (126A) adjacent à sa région plane (127) pour permettre au deuxième rayon d'être plus petit que le premier rayon, **caractérisé en ce que** la partie du ressort de garniture (124) venant en prise avec la région plane (127) de l'organe de retenue de garniture présente un bord (171) arrondi adjacent au crochet.

2. Un ensemble de frein à disque selon la revendication 1, dans laquelle ladite partie du ressort de garniture, venant en prise avec la région plane de l'organe de retenue de garniture présente un autre bord arrondi (171) distant du crochet.

3. Un ensemble de frein à disque selon la revendication 1, dans lequel le ressort de garniture est symétrique.

4. Un ensemble de frein à disque selon la revendication 3, comprenant une paire de garnitures de frein définie par ladite garniture de frein et une autre garniture de frein, et une paire de ressorts de garniture définie par ledit ressort de garniture et un autre ressort de garniture.

5. Un ensemble de frein à disque tel que défini à l'une quelconque des revendications précédentes dans lequel le bord arrondi est formé en tant que partie d'un processus de pressage-emboutissage.

6. Un ensemble de frein à disque selon l'une quelconque des revendications précédentes, dans lequel le ressort de garniture est sensiblement allongé, étant défini par une longueur (L) et une largeur, de préférence la région plane du ressort de garniture est située sur une partie centrale (148) du ressort de garniture, la partie centrale étant située sensiblement à mi distance sur la longueur du ressort de garniture, de préférence, la partie centrale définit une largeur (W2) maximale du ressort de garniture et le reste du ressort de garniture présente une largeur W1 réduite.

7. Un ensemble de frein à disque selon l'une quelconque des revendications précédentes dans lequel le ressort de garniture présente un profil incurvé dans la direction de la longueur.

8. Un ensemble de frein à disque selon l'une quelconque des revendications précédentes, dans lequel le ressort présente des extrémités (142) incurvées radialement vers l'extérieur pour retenir radialement le ressort de garniture sur la plaque support.

9. Un ensemble de frein à disque selon la revendication 8, dans lequel la plaque support présente des surfaces (140) d'incurvation complémentaire devant venir en butée avec les extrémités incurvées de ressort.

10. Un ensemble de frein à disque selon l'une quelconque des revendications précédentes, dans lequel le ressort comprend une ouverture (152) et la plaque support comprend une saillie (150) se plaçant dans l'ouverture pour empêcher tout déplacement axial entre le ressort et la plaque support.

11. Un ensemble de frein à disque selon l'une quelconque des revendications 1 à 8, dans lequel le ressort comprend une saillie se plaçant autour de la plaque support pour empêcher tout déplacement axial entre le ressort et la plaque support.

12. Un ensemble de frein à disque selon l'une quelconque des revendications précédentes, dans lequel le crochet comprend un rayon de crochet (T) pour permettre au deuxième rayon (R2) d'être plus petit que le premier rayon (R1), dans lequel le rayon de crochet est sensiblement identique au rayon (Q) du bord arrondi du ressort de garniture adjacent au crochet.

13. Un ensemble de frein à disque selon la revendication 9, dans lequel le rayon de crochet est d'une valeur comprise entre 4 mm et 8 mm, de préférence entre 5 mm et 7 mm et de manière mieux préférée entre 5,25 et 6, 75 mm.
